Europäisches Patentamt

European Patent Office

Office européen des brevets

(11) Veröffentlichungsnummer: **0 675 090 A2**

# EUROPÄISCHE PATENTANMELDUNG

(21) Anmeldenummer: **95200627.8**

(51) Int. Cl.6: **C04B 18/02**, B01J 2/00

(22) Anmeldetag: **16.03.95**

(30) Priorität: **01.04.94 DE 4411461**

(43) Veröffentlichungstag der Anmeldung:
**04.10.95 Patentblatt 95/40**

(84) Benannte Vertragsstaaten:
**BE DE FR GB IT NL**

(71) Anmelder: **METALLGESELLSCHAFT AG**
**Reuterweg 14**
**D-60323 Frankfurt am Main (DE)**

(72) Erfinder: **Dadazynski, Rolf-Peter**
**Im Seifen 26**
**D-61276 Weilrod 1 (DE)**
Erfinder: **Hankel, Dirk, Dr.**
**Wiesenstrasse 3**
**D-63165 Mühlheim (DE)**
Erfinder: **Weisel, Heiko**
**Rösenweg 7**
**D-35460 Staufenberg (DE)**

(54) **Verfahren zur Agglomeration von mineralischen Schlämmen.**

(57) Die Schlämme, die organische Bestandteile bis zu etwa 10 % enthalten - wie insbesondere Schlick aus Häfen und Flüssen -, werden mit Sand oder anderen quarzhaltigen Materialien - i. b. mit höher sandhaltigem Schlick - in einem solchen Verhältnis gemischt, daß der Quarzgehalt in der Trockensubstanz einen für eine sehr gute Keramisierung günstigen Wert erreicht. Durch Zumischung von trockenem, quarzhaltigen Material, z. B. gemahlener Trockenschlick, wird darüber hinaus ein für die Formung günstiger Feuchtigkeitsgehalt eingestellt.

Die Agglomerate werden auf einen Wanderrost chargiert und heiße, sauerstoffhaltige Gase von 500 bis 900 °C durch das Bett der Agglomerate geleitet, bis die organischen Bestandteile der Agglomerate mindestens weitgehend abgebaut und die Agglomerate kalziniert sind. Anschließend werden heiße, sauerstoffhaltige Gase von 1100 bis 1250 °C durch das Bett der Agglomerate geleitet, bis die Agglomerate keramisiert sind. Danach werden kalte Gase durch das Bett geleitet und die aufgeheizten Kühlgase - zumindest teilweise - in die Brennzone rekuperiert. Die Abgase des Wanderrostes werden einer Abgasreinigung zugeleitet.

EP 0 675 090 A2

Die Erfindung betrifft ein verfahren zur Herstellung von festen Agglomeraten aus stichfesten mineralischen Schlämmen, die bis zu etwa 10 % organische Bestandteile enthalten.

Solche Schlämme fallen insbesondere beim Ausbaggern von Häfen und Flüssen an und werden auch als Schlick bezeichnet. Ihre Trockensubstanz besteht hauptsächlich aus mineralischen Stoffen und bis zu etwa 10 % aus organischen Stoffen, bezogen auf trockene Substanz. Sie enthalten Schwermetalle wie Blei, Zink, Cadmium, Chrom usw. Ihr Wassergehalt liegt im allgemeinen über 60 %. Durch Entwässern kann der Wassergehalt zwar gesenkt werden, liegt aber noch sehr hoch. Ein Teil des Sandgehalts kann separiert werden. Die Schlämme verursachen wegen ihres hohen Wassergehalts und ihres Gehalts an Schwermetallen und organischen Bestandteilen beträchtliche Deponieprobleme.

Aus der EP - B - 217433 ist ein verfahren bekannt, bei dem solche Schlämme mit einem Wassergehalt von 60 bis 30 % durch Pressen in Formlinge geformt werden, die feuchten Preßlinge auf einen Wanderrost chargiert und heiße, sauerstoffhaltige Gase von 500 bis 900 °C durch das Bett der Formlinge geleitet werden, bis die Formlinge etwa die Temperatur der heißen, sauerstoffhaltigen Gase aufweisen, jedoch eine Temperatur von 950 °C nicht überschreiten, die trockenen Formlinge anschließend mit heißen, sauerstoffhaltigen Gasen von 1100 bis 1160 °C geklinkert werden und die geklinkerten Formlinge gekühlt werden. Das Pressen der Formlinge erfolgt mit Strangpressen, Walzenpressen oder dergl.. Die Einstellung des gewünschten Wassergehalts im Schlamm erfolgt durch Zumischung von feinkörnigem, geklinkerten Rückgut. Wenn das anfallende Feingut dazu nicht ausreicht, wird geklinkertes Material zerkleinert. Bei der Behandlung mit dem heißen, oxidierenden Gas von 500 - 900 °C erfolgt zunächst eine Trocknung der Formlinge und dann eine Verbrennung der organischen Bestandteile, wenn deren Zündtemperatur erreicht ist. Die Temperatur der heißen Gase wird so gewählt, daß in Abhängigkeit von der Verbrennungswärme der organischen Bestandteile die Temperatur in den Formlingen 950 °C nicht übersteigt. Die Behandlung wird so geführt, daß die organischen Bestandteile praktisch vollständig entfernt werden, möglichst keine Reduktion von Metallverbindungen erfolgt und die Verschlackungstemperatur von niedrigen Beschickungsbestandteilen nicht erreicht wird. Zur Bremsung des Temperaturanstiegs in den Formlingen kann der Mischung vor dem Pressen $CaCO_3$ zugegeben werden, das bei seiner Kalzination Wärme verbraucht. Bei der anschließenden Klinkerung bei 1100 bis 1160 °C werden die Schwermetalle im geklinkerten Produkt mineralisch eingeschlossen, so daß sie in nicht-auslaugbarer Form vorliegen.

Aus der EP - B - 239683 ist ein Verfahren bekannt, bei dem die Schlämme mit einem Wassergehalt von 40 bis 65 % mit trockenem Rückgut in einem solchen Verhältnis gemischt werden, daß der Wassergehalt in der Mischung 20 bis 30 % beträgt und daß der Gehalt an organischen Bestandteilen bei vollständiger Verbrennung in der Produktschicht auf dem Wanderrost nicht zur Überschreitung der gewünschten Klinkertemperatur führt. Die Mischung wird pelletiert, die Grünpellets werden auf einem Wanderrost chargiert, durch das Pellet-Bett werden heiße, sauerstoffhaltige Gase von 500 - 900 °C geleitet, bis mindestens die oberste Schicht des Bettes auf die Temperatur der heißen Gase aufgeheizt ist. Anschließend werden heiße, sauerstoffhaltige Gase von 1100 - 1160 °C durch das Bett geleitet, bis die obere Schicht geklinkert ist. Danach werden kalte Gase durch das Bett geleitet. Nach dem Abwurf vom Wanderrost wird die geklinkerte Oberschicht von der darunter liegenden Schicht getrennt und die darunter liegende Schicht als trockenes Rückgut mit dem Schlamm gemischt. Die geklinkerte Oberschicht fällt teilweise in Form von miteinander verbundenen Pellets an, während die getrocknete und teilweise geklinkerte Unterschicht weitgehend in Form einzelner Pellets, Pelletbruch und Abrieb anfällt.

In der EP - B - 334413 wird dieses Verfahren in der Weise abgewandelt, daß aus der Mischung von Schlamm und Rückgut Pellets mit kleinerem Durchmesser im Bereich von 3 bis 15 mm und Pellets mit größerem Durchmesser als obere Schicht mit einer Schichthöhe von 7 bis 15 mm auf den Wanderrost chargiert werden und nach dem Abwurf die Pellets mit größerem Durchmesser als Produkt abgesiebt werden und die Pellets mit kleinerem Durchmesser als Rückgut zurückgeführt werden.

Aus der EP - B - 339585 ist ein Verfahren bekannt, bei dem aus der Mischung von Schlamm und trockenem Rückgut Preßlinge mit kleinerer Stückgröße und Formlinge mit größerer Stückgröße hergestellt werden, wobei die Formlinge mit größerer Stückgröße ebenfalls aus Preßlingen oder Pellets bestehen können. Die Preßlinge mit kleinerer Stückgröße werden als untere Schicht auf den Wanderrost chargiert und die Formlinge mit größerer Stückgröße als obere Schicht. Nach dem vorstehend beschriebenen Brennverfahren und Abwurf vom Wanderrost werden die Preßlinge mit kleinerer Stückgröße abgesiebt und als Rückgut zurückgeführt.

Bei diesen bekannten Verfahren wird ein gutes keramisiertes Produkt erzielt, jedoch muß eine große Menge an Rückgut im Kreislauf geführt werden.

Der Erfindung liegt die Aufgabe zugrunde, diese bekannten Verfahren noch wirtschaftlicher und technisch einfacher zu gestalten.

Die Lösung dieser Aufgabe erfolgt erfindungsgemäß durch ein Verfahren zur Herstellung von festen Agglomeraten aus stichfesten mineralischen Schlämmen, die organische Bestandteile bis zu etwa 10 % enthalten, das dadurch gekennzeichnet ist, daß

a) der Quarzgehalt im Schlamm auf 30 bis 60 % eingestellt wird,

b) der Schlamm gemäß (a) mit einem Wassergehalt von 60 bis 30 % agglomeriert wird,

c) die Agglomerate auf einen Wanderrost chargiert werden,

d) heiße, sauerstoffhaltige Gase von 500 - 900 °C durch das Bett der Agglomerate geleitet werden, bis die organischen Bestandteile der Agglomerate mindestens weitgehend abgebaut und die Agglomerate kalziniert sind,

e) anschließend heiße, sauerstoffhaltige Gase von 1100 bis 1250 °C durch das Bett der Agglomerate geleitet werden, bis die Agglomerate keramisiert sind,

f) Kühlgas durch das Bett der keramisierten Agglomerate geleitet wird,

g) mindestens ein Teil des aufgeheizten Kühlgases als heißes, sauerstoffhaltiges Gas gemäß (e) und/oder (d) durch das Bett der Agglomerate geleitet wird, und

h) das Abgas des Wanderrosts nach einer Abgasreinigung abgeleitet wird.

Der Quarzgehalt im Schlamm kann durch Zugabe von Sand oder anderen quarzhaltigen Stoffen, z. B. sandhaltiger Schlick, eingestellt werden, oder bei der Abtrennung von Sand aus dem Rohschlick wird nur so viel Sand entfernt, daß der gewünschte Quarzgehalt im Schlamm vorliegt. Der für die jeweilige Schlicksorte günstige Quarzgehalt kann empirisch ermittelt werden. Weiterhin können Schlämme mit unterschiedlichem Quarzgehalt entsprechend gemischt werden. Die Agglomerate können aus Preßlingen oder Pellets bestehen. Bei der Behandlung mit den heißen, sauerstoffhaltigen Gasen von 500 - 900 °C erfolgt neben der Verbrennung der brennbaren Bestandteile der Mischung gleichzeitig eine Kalzinierung, bei der Kristallwasser und CO2 ausgetrieben werden. Wenn der Wassergehalt des anfallenden Schlamms über dem gewünschten Wert liegt, kann der Wassergehalt durch Zugabe von feinkörnigem, trockenen Material, wie z. B. quarzhaltiges Material, getrockneter Schlick oder Rückgut auf den gewünschten Wert eingestellt werden.

Die Vorteile der Erfindung bestehen darin, daß durch die Einstellung des Quarzgehalts eine sehr gute Keramisierung der einzelnen Agglomerate erfolgt, die einzelnen Agglomerate wesentlich unempfindlicher gegen ein Verschmelzen miteinander sind, wodurch eine sehr gute Gasdurchlässigkeit des Bettes erhalten bleibt. Dadurch fällt erheblich weniger schwachgebrannntes Rückgut an, wodurch die Abgasmenge, bezogen auf das keramisierte Produkt, erheblich gesenkt wird und die spezifische Durchsatzleistung des Wanderrostes bei gleicher Schichthöhe erhöht wird.

Eine Ausgestaltung der Erfindung besteht darin, daß der Quarzgehalt im Schlamm auf 40 bis 50 % eingestellt wird. Mit diesen Quarzgehalten werden gute Ergebnisse erzielt, ohne daß eine große Menge an quarzhaltigen Stoffen zugesetzt werden muß oder im Schlamm vorhanden sein muß.

Eine Ausgestaltung besteht darin, daß die Keramisierung der Agglomerate mit heißen, sauerstoffhaltigen Gasen von 1150 - 1200 °C erfolgt. In diesem Bereich wird eine sehr gute Keramisierung ohne zu hohen Wärmeaufwand erzielt.

Eine Ausgestaltung besteht darin, daß die Agglomerate vor der Aufgabe auf den Wanderrost durch direkten Wärmeaustausch mit heißen Gasen separat getrocknet werden.

Die Trocknung kann als teilweise oder vollständige Trocknung durchgeführt werden. Als heißes Gas kann Abgas vom Wanderrost, Gas aus der Nachverbrennung des Abgases oder fremdes heißes Gas verwendet werden. Bei einer teilweisen separaten Trocknung kann die Drucktrocknungszone auf dem Wanderrost entfallen. Bei einer Aufgabe von ungetrockneten Agglomeraten erfolgt auf dem Wanderrost zunächst eine Drucktrocknung, bei der heiße Gase von unten durch das Bett gedrückt werden und in der Wasser aus dem unteren Teil des Bettes ausgetrieben wird. Anschließend erfolgt eine Saugtrocknung, in der heiße Gase von oben durch das Bett gesaugt werden. Durch die vorherige Drucktrocknung wird vermieden, daß in der Saugtrocknungszone so viel Wasser im unteren Bett kondensiert, daß die Agglomerate dort plastisch werden. Diese Drucktrocknung ist bei einer entsprechenden separaten teilweisen Trocknung nicht erforderlich. Bei einer vollständigen separaten Trocknung kann die gesamte Trocknungszone auf dem Wanderrost entfallen. Durch die separate Trocknung wird der Wanderrost also teilweise ganz von der Niedrigtemperaturarbeit der Trocknung entlastet. Die separate Trocknung erfolgt im allgemeinen auf eine möglichst geringe Feuchte, solange dies mit wirtschaftlichen Mitteln erfolgen kann.

Eine Ausgestaltung besteht darin, daß die Agglomerate vor der Aufgabe auf den Wanderrost durch indirekten Wärmeaustausch separat getrocknet werden.

Bei der indirekten Trocknung kann zusätzlich ein Schleppgas verwendet werden. Bei der verwendung von heißem Schleppgas wird ein Teil der für die Trocknung erforderlichen Wärme von dem Schleppgas direkt eingebracht. Bei der indirekten separaten Trocknung wird zusätzlich zu den bei der direkten Trocknung geschilderten Vorteilen der Vorteil erzielt, daß das für die Erzeugung der Trocknungswärme erforderliche Heizmittel nicht kontaminiert wird und gereinigt werden muß. Die bei der indirekten Trocknung entstehenden Brüden und das eventuell verwendete Schleppgas können durch eine Kondensation geleitet werden, in der Schadstoffe auskondensiert und als Kondensat abgeführt werden. Überschüssiges Gas kann aus der Kondensation abgeführt oder separat gereinigt oder der Abgasbehandlung des Wanderrostes zugeführt werden. Die Brüden und das Schleppgas können auch ohne Kondensation analog gereinigt werden.

Eine Ausgestaltung besteht darin, daß der für die Agglomeration erforderliche Wassergehalt des Schlammes durch Beimischung von Feingut aus der separaten Trocknung und/oder keramisiertem Feingut aus dem vom Wanderrost abgeworfenen Material eingestellt wird.

Wenn über das anfallende getrocknete und keramisierte Feingut noch weiteres Material zur Einstellung des Wassergehalts im Schlamm erforderlich ist, wird vorzugsweise Material aus der Trocknung zerkleinert und dem Schlamm beigemischt. Das Material aus der separaten Trocknung ist noch nicht über den Wanderrost gelaufen und läßt sich besser zerkleinern.

Die Erfindung wird anhand von Beispielen näher erläutert.

## BEISPIELE

### 1. Beispiel: **ohne Quarzzusatz**

Für den Versuch auf der diskontinuierlich arbeitenden Versuchsbrennpfanne wurde ein Schlick mit einer Feuchtigkeit von 37,3 % verwendet, der einen Quarzgehalt von 38 %, bezogen auf Trockensubstanz, enthielt. Der Gesamt-SiO2-Gehalt betrug 65,3%. Dem Schlick wurde kein Feinsand zugemischt.

Aus dem Schlick mit der o.g. Nässe wurden Extrudate mit einem Durchmesser von 15 mm hergestellt. Das Verhältnis Länge zu Durchmesser der Extrudate betrug ca. 1 : 1. Die feuchten Extrudate passierten vor der separaten indirekten Trocknung noch einen Rollenrost, um die Beanspruchung der Extrudate entsprechend der Großanlage zu simulieren.

Der Brennversuch wurde wie folgt vorbereitet: Über die Roststäbe der Brennpfanne wurden 2,1 kg Rostbelag aus Produktextrudaten eingefüllt. Diese Menge entsprach einer Füllhöhe von 5 cm. Darüber wurde eine 20 cm hohe Schicht, bestehend aus 8,3 kg getrockneten Extrudaten, chargiert. Zur Kontrolle des Temperaturverlaufs in der Schüttung wurden Thermoelemente eingesetzt.

Bei einem Unterdruck von 4 mbar wurde mit der Aufheizung mittels heißer Rauchgase begonnen. Die Rauchgastemperatur wurde in 6 Minuten bis zur Oxidationsstufe auf 850 °C erhöht. Diese Stufe wurde ca. 3,5 Minuten eingehalten. Dann erfolgte eine Anhebung der Rauchgastemperatur in 1,5 Minuten auf die Keramisierungstemperatur, die bei diesem Quarzgehalt auf 1150 °C begrenzt werden mußte.

Diese wurde 8 Minuten beibehalten. Der Unterdruck wurde inzwischen stufenweise bis auf 20 mbar angehoben, um die Temperaturfront besser durch die Schüttung passieren zu lassen.

Nachdem die Temperatur im Materialbett über dem Rostbelag 1140 °C erreicht hatte, wurde der Brennprozeß beendet und die Druckkühlung erfolgte durch Einleitung von Kaltluft mit einem Druck von 20 mbar. Nach 5,3 Minuten (Gesamtzeit) war der Kühlvorgang beendet.

Aus der Austragsmenge von 7,1 kg Produkt errechnet sich eine Leistung von 7,6 tato Produkt/m2 Rostfläche. Das Produkt hatte eine durchschnittliche Druckfestigkeit von 398 N/Extrudat, war aber wegen der milden Brennbedingungen noch nicht homogen genug:

Probe 1 = 567 N/E
Probe 2 = 407 N/E
Probe 3 = 220 N/E

### 2. Beispiel: **Einstellung des Quarzgehalts**

Für den Brennversuch auf einer diskontinuierlich arbeitenden Versuchsbrennpfanne wurde ein Schlick mit einer Feuchtigkeit von 45,5 % verwendet, der einen Quarzgehalt von 36,5 %, bezogen auf Trockensubstanz, enthielt. Der Gesamt-SiO2-Gehalt betrug 61,2 %. Um den Quarzgehalt auf ca. 45 % anzuheben, wurden 15 % Feinsand - bezogen auf den trockenen Schlick - zugemischt. Die Mischung hatte somit eine Zusammensetzung von 87 % Schlick und 13 % Sand. Der Quarzgehalt in der Mischung betrug 44,8 %.

Der Schlick hatte eine Nässe von 45,5 %. Nachdem der trockene Sand beigemischt worden war, lag die Nässe der Mischung bei 38,5 %. Aus dem Gemisch wurden dann Extrudate mit einem Durchmesser von 15 mm hergestellt. Das Verhältnis Länge zu Durchmesser der Extrudate betrug ca. 1 : 1. Die feuchten Extrudate passierten vor der separaten indirekten Trocknung noch einen Rollenrost, um die Beanspruchung der Extrudate entsprechend der Großanlage zu simulieren.

Der Brennversuch wurde wie folgt vorbereitet: Über die Roststäbe der Brennpfanne wurden 2,1 kg Rostbelag aus Produktextrudaten eingefüllt. Diese Menge entsprach einer Füllhöhe von 5 cm. Darüber wurde eine 20 cm hohe Schicht, bestehend aus 8,3 kg getrockneten Extrudaten, chargiert. Um während des Versuchs den Temperaturvorlauf in der Schüttung kontrollieren zu können, wurden Thermoelemente eingesetzt.

Zu Beginn des Versuchs wurde bei einem Unterdruck von 3 mbar mit der Aufheizung begonnen. Die Rauchgastemperatur wurde in 6 Minuten bis zur Oxidationsstufe auf 850 °C erhöht. Diese Stufe wurde ca. 3,5 Minuten eingehalten. Dann erfolgte eine Anhebung der Rauchgastemperatur in 2,5 Minuten auf die Keramisierungstemperatur, die wegen des eingestellten höheren Quarzgehalts ohne die Gefahr von Verschmelzungen auf 1180 °C angehoben werden konnte. Die Keramisierungstemperatur wurde 7 Minuten beibehalten. Der Unterdruck wurde inzwischen stufenweise bis auf 20 mbar angehoben, um die Temperaturfront besser durch die Schüttung passieren zu lassen.

Nachdem die Temperatur über dem Rostbelag ca.1170 °C erreicht hatte, wurde der Brennprozeß beendet und die Druckkühlung erfolgte durch Einleitung von Kaltluft mit einem Druck von 20 mbar. Nach 6 Minuten war der Kühlvorgang beendet.

Aus der Austragsmenge von 7,1 kg Produkt errechnet sich eine Leistung von 7,4 tato Produkt/m2 Rostfläche. Aus den gemessenen Abgas- und Kühlluftmengen errechnet sich über eine Massen- und Wärmebilanz eine Gesamtrohgasmenge von 3900 Nm3/t Produkt. Das Produkt wurde auf seine Qualität untersucht. Das Produkt hatte eine höhere durchschnittliche Druckfestigkeit von 616 N/Extrudat und eine gleichmäßigere Qualität:

Probe 1 = 685 N/E
Probe 2 = 660 N/E
Probe 3 = 502 N/E.

## Patentansprüche

1. Verfahren zur Herstellung von festen Agglomeraten aus stichfesten mineralischen Schlämmen, die organische Bestandteile bis zu ewa 10 % enthalten, dadurch gekennzeichnet, daß
   a) der Quarzgehalt im Schlamm auf 30 bis 60 % eingestellt wird,
   b) der Schlamm gemäß (a) mit einem wassergehalt von 60 bis 30 % agglomeriert wird,
   c) die Agglomerate auf einen Wanderrost chargiert werden,
   d) heiße, sauerstoffhaltige Gase von 500 - 900 °C durch das Bett der Agglomerate geleitet werden, bis die organischen Bestandteile der Agglomerate mindestens weitgehend abgebaut sind und die Agglomerate kalziniert sind,
   e) anschließend heiße, sauerstoffhaltige Gase von 1100 bis 1250 °C durch das Bett der Agglomerarte geleitet werden, bis die Agglomerate keramisiert sind,
   f) Kühlgas durch das Bett der keramisierten Agglomerate geleitet wird,
   g) mindestens ein Teil des aufgeheizten Kühlgases als heißes, sauerstoffhaltiges Gas gemäß (e) und/oder (d) durch das Bett der Agglomerate geleitet wird, und
   h) das Abgas des Wanderrosts nach einer Abgasreinigung abgeleitet wird.

2. Verfahren nach Anspruch 1, dadurch gekennzeichnet, daß der Quarzgehalt im Schlamm gemäß (a) auf 40 bis 50 % eingestellt wird.

3. Verfahren nach Anspruch 1 oder 2, dadurch gekennzeichnet, daß die Keramisierung der Agglomerate gemäß (e) mit heißen, sauerstoffhaltigen Gasen von 1150 - 1200 °C erfolgt.

4. Verfahren nach einem der Ansprüche 1 - 3, dadurch gekennzeichnet, daß die Agglomerate gemäß (b) vor der Aufgabe auf den Wanderrost gemäß (c) durch direkten Wärmeaustausch mit heißen Gasen separat getrocknet werden.

5. Verfahren nach einem der Ansprüche 1 - 3, dadurch gekennzeichnet, daß die Agglomerate gemäß (b) vor der Aufgabe auf den Wanderrost gemäß (c) durch indirekten Wärmeaustausch separat getrocknet werden.

6. Verfahren nach einem der Ansprüche 1 - 5, dadurch gekennzeichnet, daß der für die Agglomeration erforderliche Wassergehalt des Schlammes gemäß (b) durch Beimischung von Feingut aus der separaten Trocknung und/oder keramisiertem Feingut aus dem vom Wanderrost abgeworfenen Material eingestellt wird.